# EUROPEAN PATENT APPLICATION

(11) **EP 4 531 195 A1**
(43) Date of publication of application: **02.04.2025**
(21) Application number: 24824678.7
(22) Date of filing: 23.07.2024
(51) Int. Cl.: H01M 50/507, H01M 50/258, H01M 50/244

(54) **BATTERY MODULE AND BATTERY PACK**

(30) Priority: 04.08.2023 CN 202322098295 U
(71) Applicant: EVE Energy Storage Co., Ltd., Wuhan Hubei 430000 (CN)
(72) Inventor: WU, Mingli, Wuhan, Hubei 430200 (CN); LIAO, Yong, Wuhan, Hubei 430200 (CN); ZHAO, Xin, Wuhan, Hubei 430200 (CN)
(74) Representative: Herrero & Asociados, S.L.
(86) International application number: PCT/CN2024/106981
(87) International publication number: WO 2025/031139

(57) **Abstract**

The present disclosure provides a battery module and a battery pack. The battery module includes a plurality of cells and a busbar assembly. The busbar assembly includes a first plastic bracket and aluminum busbars for connecting two adjacent cells. The aluminum busbars are arranged on the first plastic bracket. The first plastic bracket is provided with heat rivet posts corresponding to the aluminum busbars. The aluminum busbar is provided with a fixing hole matching the heat rivet post. The heat rivet post is inserted into the fixing hole, where at least a portion of a circumferential sidewall of the heat rivet post cooperates with at least a portion of an inner wall of the fixing hole, to fix the aluminum busbar at a circumferential position of the heat rivet post.

## Description

The present disclosure claims priority to Chinese Patent Application No. 202322098295.8, filed to the Chinese Patent Office on August 4, 2023, the disclosure of which is incorporated herein by reference in its entirety.

### TECHNICAL FIELD

The present disclosure relates to the technology field of batteries, and in particular, to a battery module and a battery pack.

### BACKGROUND

Battery modules usually include a plurality of cells and a busbar assembly for connecting the plurality of cells. Specifically, the busbar assembly consists of aluminum busbars for connecting the cells in series or in parallel, and a plastic bracket for carrying the aluminum busbars. When in use, the plastic bracket is arranged between the cells and the aluminum busbars, and positive electrodes or negative electrodes of the cells pass through the plastic bracket and are welded to the aluminum busbars.

In related technologies, when assembling the aluminum busbar to the plastic bracket and welding the aluminum busbar to its corresponding cells, in order to prevent the aluminum busbar from being misaligned during a welding process, it is necessary to temporarily fix the aluminum busbar by using tape or double-sided tape. After the welding is completed, the tape or double-sided tape used for temporary fixing needs to be removed.

### SUMMARY

### TECHNICAL PROBLEM

The above fixing manner has low precision, and the temporary fixing steps are cumbersome. In addition, during the process of removing the tape or double-sided tape after the welding is completed, there is a risk of damaging the connection structures between the aluminum busbar and the cells and causing a false weld.

### TECHNICAL SOLUTION

In a first aspect, the present disclosure provides a battery module, including a plurality of cells and a busbar assembly. The busbar assembly includes a first plastic bracket and aluminum busbars for connecting two adjacent cells. The aluminum busbars are arranged on the first plastic bracket. A top surface of the first plastic bracket is provided with heat rivet posts corresponding to the aluminum busbars. The aluminum busbar is provided with a fixing hole matching the heat rivet post. The heat rivet post is inserted into the fixing hole, where at least a portion of a circumferential sidewall of the heat rivet post cooperates at least a portion of an inner wall of the fixing hole, to fix the aluminum busbar at a circumferential position of the heat rivet post.

In a second aspect, the present disclosure provides a battery pack, including the foregoing battery module.

### ADVANTAGES AND BENEFICIAL EFFECTS

By an interaction between the heat rivet post and the fixing hole, the aluminum busbar and the heat rivet post are relatively fixed in a circumferential direction of the heat rivet post, thereby realizing a pre-fixation of the aluminum busbar, facilitating the welding and fixation of the aluminum busbar and the cells, and being beneficial to improving the pre-fixation efficiency and accuracy of the aluminum busbar.

### BRIEF DESCRIPTION OF THE DRAWINGS

FIG. 1 is a three-dimensional structural schematic diagram of a first plastic bracket after being assembled with aluminum busbars according to an embodiment of the present disclosure.
FIG. 2 is a first three-dimensional structural schematic diagram of a battery module according to an embodiment of the present disclosure.
FIG. 3 is an exploded structural schematic diagram of a battery module according to an embodiment of the present disclosure.
FIG. 4 is a three-dimensional structural schematic diagram of a battery module after removing one battery row according to an embodiment of the present disclosure.
FIG. 5 is a second three-dimensional structural schematic diagram of a battery module according to an embodiment of the present present disclosure.

Reference numerals in the drawings: 10a, first plastic bracket; 10b, second plastic bracket; 101, sinking groove; 102, connection hole; 103, heat rivet post; 104, positive output bar; 105, first fixing post; 1051, first locking hole; 106, second fixing post; 1061, second locking hole; 107, negative output bar; 110, aluminum busbar; 111, fixing hole; 120, collection line; 121, crimped nickel sheet; 122, connector; 20, cell; 210, positive pole; 220, negative pole.

### DETAILED DESCRIPTION

In the description of the present disclosure, it should be noted that orientations or positional relationships indicated by the terms "upper", "lower", "front", "rear", "left", "right", "vertical", "horizontal", "top", "bottom", "inside" and "outside", etc., are based on the orientations or positional relationships shown in the accompanying drawings, and are only for the convenience of describing the present disclosure and simplifying the description, rather than indicating or implying that devices or components referred to must have a specific orientation, be constructed and operated in a specific orientation, and therefore should not be understood as a limitation on the present disclosure.

Unless otherwise defined, all technical and scientific terms used herein have the same meaning as commonly understood by one of ordinary skill in the art to which this disclosure belongs. The terms used in the description of the present disclosure are only for the purpose of describing specific embodiments and are not intended to limit the present disclosure.

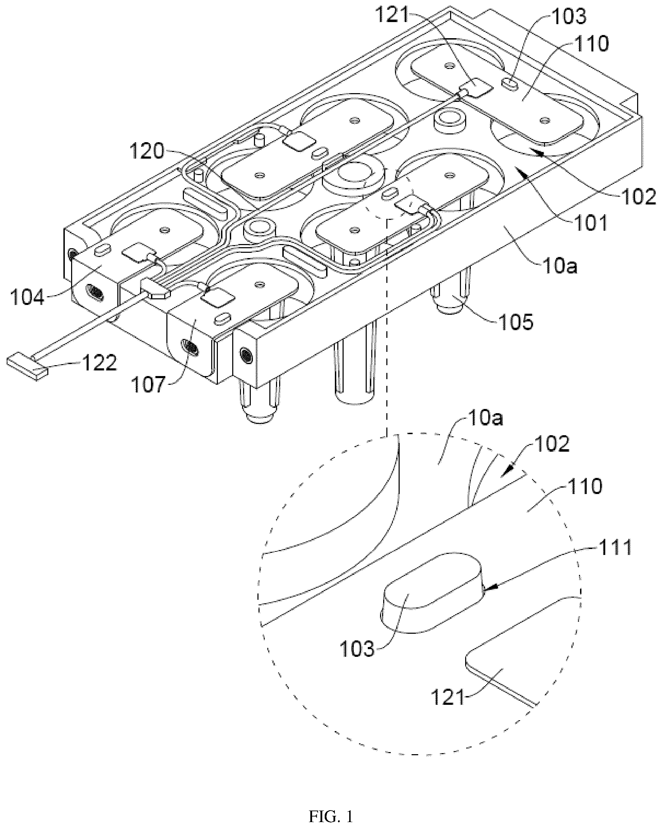

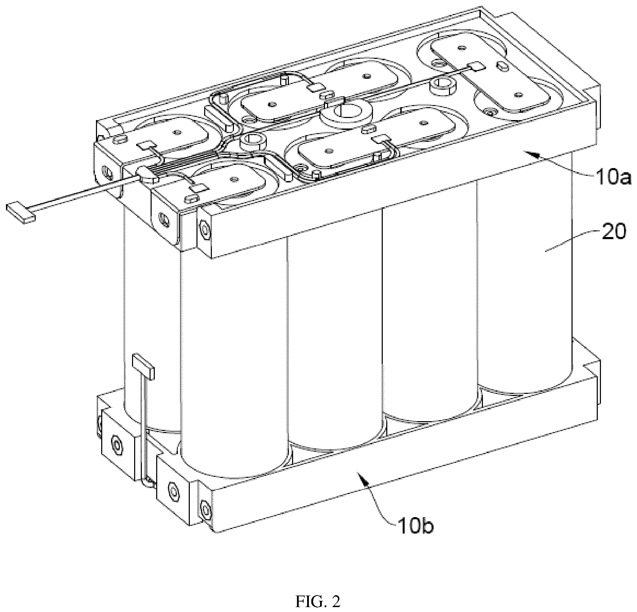

Please refer to FIGs. 1 to 5, a battery module includes a plurality of cells 20 and a busbar assembly. The busbar assembly includes a first plastic bracket 10a and aluminum busbars 110 for connecting two adjacent cells 20 in series and/or in parallel. The aluminum busbars 110 are arranged on a top surface of the first plastic bracket 10a. The top surface of the first plastic bracket 10a is provided with heat rivet posts 103 corresponding to the aluminum busbars 110. The aluminum busbar 110 is provided with a fixing hole 111 matching the heat rivet post 103. The heat rivet post 103 is inserted into the fixing hole 111, and at least a portion of a circumferential sidewall of the heat rivet post 103 cooperates with at least a portion of an inner wall of the fixing hole 111, to fix the aluminum busbar 110 at a circumferential position of the heat rivet post 103. In this embodiment, the first plastic bracket 10a is provided with a plurality of connection holes 102 formed through the first plastic bracket 10a. The plurality of connection holes 102 correspond one-to-one with the plurality of cells 20. A positive pole 210 and a negative pole 220 of the cell 20 are connected to the aluminum busbar 110 through their corresponding connection holes 102. When in use, the aluminum busbar 110 is placed on the top surface of the first plastic bracket 10a, and its corresponding heat rivet post 103 passes through the fixing hole 111. By an interaction between the heat rivet post 103 and the fixing hole 111, the aluminum busbar 110 and the heat rivet post 103 are relatively fixed in a circumferential direction of the heat rivet post 103, thereby realizing a pre-fixation of the aluminum busbar 110, facilitating the welding and fixation of the aluminum busbar 110 and the cells 20, and being beneficial to improving the pre-fixation efficiency and accuracy of the aluminum busbar 110.

In some embodiments, the heat rivet post 103 extends in a direction away from the top surface of the first plastic bracket 10a.

In some embodiments, an axial cross-section of the heat rivet post 103 is in any one of a polygonal shape, a semicircular shape, a waist shape, and an elliptical shape. It can be understood that when the axial cross-section of the heat rivet post 103 is in a polygonal shape, a contour of the fixing hole 111 is in a corresponding polygonal shape, such as a triangle, a hexagon, etc. When the axial cross-section of the heat rivet post 103 is in a semicircular shape, the contour of the fixing hole 111 is in a corresponding semicircular shape. The same applies to a waist shape and an elliptical shape. After the circumferential sidewall of the heat rivet post 103 having the above-mentioned shape cooperate with the inner wall of the fixing hole 111, they can limit each other in the circumferential direction of the heat rivet post 103, so as to achieve the pre-fixation of the aluminum busbar 110.

It should be noted that the axial cross-section of the heat rivet post 103 may also be in other shapes, and is not limited to the shapes listed above, as long as the heat rivet post 103 and the fixing hole 111 can be mutually limited in the circumferential direction of the heat rivet post 103.

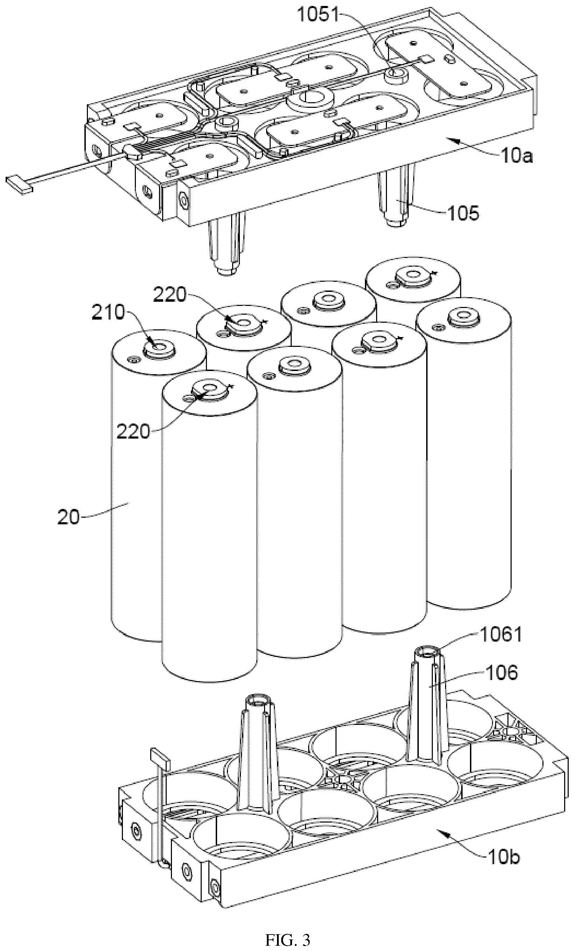

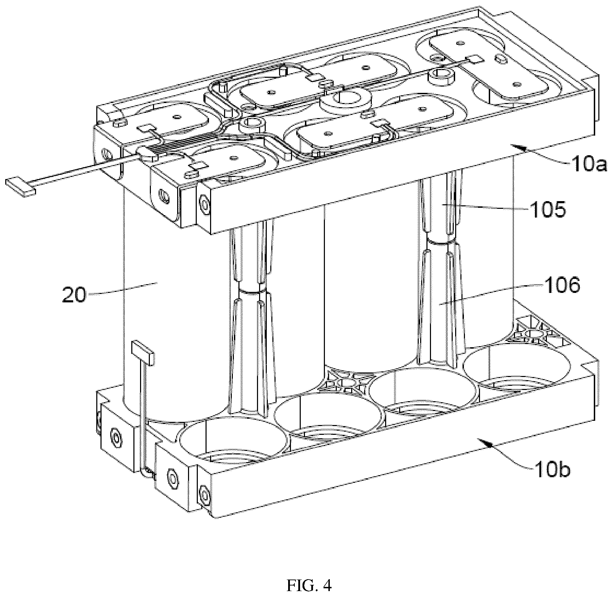

As shown in FIGs. 3 and 4, in some embodiments, the busbar assembly further includes a second plastic bracket 10b. The second plastic bracket 10b is arranged opposite to the first plastic bracket 10a, and the cells 20 are arranged between the first plastic bracket 10a and the second plastic bracket 10b. One side of the first plastic bracket 10a facing the second plastic bracket 10b is provided with first fixing posts 105, and one side of the second plastic bracket 10b facing the first plastic bracket 10a is provided with second fixing posts 106 corresponding to the first fixing posts 105. The first fixing post 105 and the second fixing post 106 are coaxially plugged, and an axis of the first fixing post 105 and the second fixing post 106 is located in a gap among the cells 20. In some embodiments, the first fixing post 105 and the second fixing hole 111 are plugged into each other to achieve an connection between the first plastic bracket 10a and the second plastic bracket 10b.

In some embodiments, in order to improve the firmness of the first plastic bracket 10a and the second plastic bracket 10b after assembly, the first fixing post 105a is provided with a first locking hole 1051, and the second fixing post 106 is provided with a second locking hole 1061. When the first fixing post 105 and the second fixing post 106 are coaxially plugged, the first locking hole 1051 and the second locking hole 1061 are coaxial. The battery module further includes fixing rods (not shown in the figure). One end of the fixing rod close to the first locking hole 1051 is provided with a first fixing block (not shown in the figure), and one end of the fixing rod close to the second locking hole 1061 is provided with a second fixing block (not shown in the figure). The first fixing block abuts against one end of the first fixing post 105 away from the second fixing post 106, and the second fixing block abuts against one end of the second fixing post 106 away from the first fixing post 105. When in use, the fixing rod is inserted into the first locking hole 1051 and the second locking hole 1061, the first fixing block is pressed against an outer end of an inner wall of the first locking hole 1051 of the first fixing post 105, and the second fixing block is pressed against an outer end of an inner wall of the second locking hole 1061. In some embodiments, the first fixing block and the fixing rod are integrally formed, and the second fixing block is threadedly connected to the fixing rod. The first plastic bracket 10a and the second plastic bracket 10b are firmly fixed by coordinating the fixing rod with the second fixing block, thereby effectively improving the structural stability of the battery module. In some embodiments, the first fixing block and the second fixing block are both threadedly connected to the fixing rod.

In some embodiments, a circumferential sidewall of each of the first fixing post 105 and the second fixing post 106 is provided with reinforcing ribs, thereby effectively improving the structural strength of the first fixing post 105 and the second fixing post 106.

As shown in FIG. 3, the cell 20 is a cylindrical cell, the positive pole 210 of the cell 20 is located at one axial end of the cell 20, and the negative pole 220 of the cell 20 is located at the other axial end of the cell 20. In this embodiment, eight cells 20 are taken as an example for description. Specifically, four cells 20 are arranged in a length direction of the battery module, which is defined as a battery row. In a length direction of the battery row, the positive pole 210 of the first cell 20 is arranged toward the first plastic bracket 10a, and the negative pole 220 is arranged toward the second plastic bracket 10b; the negative pole 220 of the second cell 20 is arranged toward the first plastic bracket 10a, and the positive pole 210 is arranged toward the second plastic bracket 10b. In some embodiments, in the battery row, the directions of the poles of the cells 20 arranged at odd positions are consistent, the directions of the poles of the cells 20 arranged at even positions are consistent, and the directions of the poles of the cells 20 arranged at odd positions are opposite to the directions of the poles arranged at even positions. The aluminum busbar 110 connects two adjacent cells 20 in series in the length direction of the battery row. Specifically, as shown in FIG. 3, the positive pole 210 of the first cell 20 is connected to a positive output bar 104, which is a positive output terminal of the battery module; the second cell 20 and the third cell 20 are connected in series by the aluminum busbar 110; the fourth cell 20 and the fourth cell 20 of an other battery row are connected in series by the aluminum busbar 110, and so on. The negative pole 220 of the first cell 20 of the other battery row is connected to a negative output bar 107, which is a negative output terminal of the battery module.

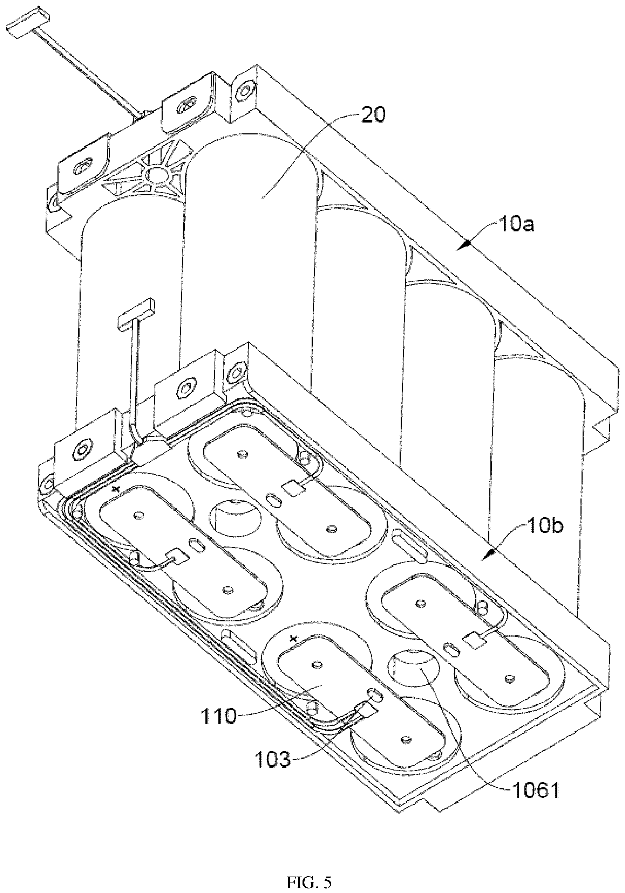

Correspondingly, one side of the second plastic bracket 10b facing away from the first plastic bracket 10a is provided with heat rivet posts 103 and aluminum busbars 110 that are the same as the top surface of the first plastic bracket 10a, which cooperates with the aluminum busbar 110 provided on the first plastic bracket 10a to connect two adjacent cells 20 along the length direction of the battery row in series. Specifically, the first cell 20 and the second cell 20 in the length direction of a first battery row are connected in series by the aluminum busbar 110, and the third cell 20 and the fourth cell 20 are also connected in series by the aluminum busbar 110; the four cells 20 of another battery row are connected in series in the same manner as the four cells 20 of the first battery row, specifically as shown in FIG. 5.

In this embodiment, the battery module further includes collection lines 120. An input end of each collection line 120 is provided with a crimped nickel sheet 121. The crimped nickel sheet 121 is connected to at least one of the aluminum busbars 110. An output end of the collection line 120 is connected to a connector 122. The collection line 120 transmits temperature and pressure signals collected by the crimped nickel sheet 121 to the connector 122, and the connector 122 is connected to a BMS to manage the battery module according to the temperature and pressure signals.

In some embodiments, the first plastic bracket 10a and the second plastic bracket 10b have the same appearance. When in use, the two are arranged in a mirrored manner.

In this embodiment, the top surface of the first plastic bracket 10a is provided with a sinking groove 101. The heat rivet posts 103 are arranged at a bottom of the sinking groove 101, and the aluminum busbars 110 are arranged in the sinking groove 101. The sinking groove 101 here can accommodate the aluminum busbars 110 and the collection lines 120, which is helpful to reduce the overall height of the busbar assembly.

This embodiment further provides a battery pack, which includes the above-mentioned battery module. The busbar assembly of the battery pack is easy to assemble and has high efficiency.

## Claims

1. A battery module, comprising:
a plurality of cells (20); and
a busbar assembly comprising a first plastic bracket (10a) and aluminum busbars (110) for connecting two adjacent cells (20), wherein the aluminum busbars (110) are arranged on the first plastic bracket (10a);
wherein the first plastic bracket (10a) is provided with heat rivet posts (103) corresponding to the aluminum busbars (110); the aluminum busbar (110) is provided with a fixing hole (111) matching the heat rivet post (103);
the heat rivet post (103) is inserted into the fixing hole (111), wherein at least a portion of a circumferential sidewall of the heat rivet post (103) cooperates with at least a portion of an inner wall of the fixing hole (111), to fix the aluminum busbar (110) at a circumferential position of the heat rivet post (103).

2. The battery module according to claim 1, wherein the heat rivet post (103) extends in a direction away from the first plastic bracket (10a).

3. The battery module according to claim 1 or 2, wherein an axial cross-section of the heat rivet post (103) is in any one of a polygonal shape, a semicircular shape, a waist shape, and an elliptical shape.

4. The battery module according to claim 1, wherein the busbar assembly further comprises a second plastic bracket (10b), wherein the second plastic bracket (10b) is arranged opposite to the first plastic bracket (10a), and the cells (20) are arranged between the first plastic bracket (10a) and the second plastic bracket (10b);
one side of the first plastic bracket (10a) facing the second plastic bracket (10b) is provided with first fixing posts (105), and one side of the second plastic bracket (10b) facing the first plastic bracket (10a) is provided with second fixing posts (106) corresponding to the first fixing posts (105);
wherein the first fixing post (105) and the second fixing post (106) are coaxially plugged, and an axis of the first fixing post (105) and the second fixing post (106) is located in a gap among the cells (20).

5. The battery module according to claim 4, wherein the first fixing post (105) is provided with a first locking hole (1051), and the second fixing post (106) is provided with a second locking hole (1061);
when the first fixing post (105) and the second fixing post (106) are coaxially plugged, the first locking hole (1051) and the second locking hole (1061) are coaxial;
the battery module further comprises a fixing rod that passes through the first locking hole (1051) and the second locking hole (1061); wherein one end of the fixing rod close to the first locking hole (1051) is provided with a first fixing block; one end of the fixing rod close to the second locking hole (1061) is provided with a second fixing block; the first fixing block abuts against one end of the first fixing post (105) away from the second fixing post (106), and the second fixing block abuts against one end of the second fixing post (106) away from the first fixing post (105).

6. The battery module according to claim 4, wherein a circumferential sidewall of each of the first fixing post (105) and the second fixing post (106) is provided with reinforcing ribs.

7. The battery module according to claim 5, wherein the first fixing block and/or the second fixing block are threadedly connected to the fixing rod.

8. The battery module according to claim 1, wherein a top surface of the first plastic bracket (10a) is provided with a sinking groove (101); wherein the heat rivet post (103) is arranged at a bottom of the sinking groove (101), and the aluminum busbars (110) are arranged in the sinking groove (101).

9. The battery module according to claim 1, wherein the battery module further comprises collection lines (120), wherein an input end of the collection line (120) is provided with a crimped nickel sheet (121), wherein the crimped nickel sheet (121) is connected to at least one of the aluminum busbars (110);
an output end of the collection line (120) is connected to a connector (122).

10. A battery pack, comprising the battery module according to any one of claims 1 to 9.
